# EUROPÄISCHE PATENTSCHRIFT

(11) **EP 3 402 974 B1**
(45) Veröffentlichungstag und Bekanntmachung des Hinweises auf die Patenterteilung: **07.10.2020**
(21) Anmeldenummer: 17707288.1
(22) Anmeldetag: 24.02.2017
(51) Int. Cl.: F02C 3/36, F02C 6/00, F02C 6/18, F02C 9/16, F02C 7/18

(54) **MIKROGASTURBINENANLAGE UND VERFAHREN ZUM BETREIBEN EINER MIKROGASTURBINENANLAGE**
MICRO-GAS TURBINE PLANT AND METHOD FOR OPERATING A MICRO-GAS TURBINE PLANT
INSTALLATION DE MICROTURBINE À GAZ ET PROCÉDÉ POUR FAIRE FONCTIONNER UNE INSTALLATION DE MICROTURBINES À GAZ

(30) Priorität: 23.03.2016 DE 102016105489
(43) Veröffentlichungstag der Anmeldung: 21.11.2018
(73) Patentinhaber: Deutsches Zentrum für Luft- und Raumfahrt e.V., 51147 Köln (DE)
(72) Erfinder: HASEMANN, Stefan, 71672 Marbach (DE)
(74) Vertreter: Fleck, Hermann-Josef
(86) Internationale Anmeldenummer: PCT/EP2017/054332
(87) Internationale Veröffentlichungsnummer: WO 2017/162401

(56) Entgegenhaltungen:
- DE-A1-102013 112 851
- US-A- 5 950 417
- US-A1- 2012 131 925
- US-A1- 2014 182 298
- US-B1- 6 298 654

## Beschreibung

Die Erfindung betrifft eine Mikrogasturbinenanlage umfassend eine Brennkammer zur Erzeugung von Abgas durch Verbrennung von der Brennkammer zugeführtem Brennstoff, eine stromab der Brennkammer in einer Abgasleitung angeordnete Turbine zur Entspannung des Abgases auf einen Druck unterhalb des Atmosphärendrucks, einen stromab der Turbine angeordneten Verdichter und eine der Turbine zugeordnete Einrichtung zur Energieauskopplung, wobei die Brennkammer eine Primärgaszufuhr zur Zugabe von Primärgas, insbesondere Primärluft, aufweist, das an der Verbrennung in einer primären Verbrennungszone teilnimmt. Weiterhin betrifft die Erfindung ein Verfahren zum Betreiben einer Mikrogasturbinenanlage sowie ein Blockheizkraftwerk unter Verwendung einer Mikrogasturbinenanlage.

Im Bereich der Gasturbinenentwicklung liegt der Fokus heutzutage neben der Weiterentwicklung von Großkraftwerks-Gasturbinen in Leistungsklassen von mehreren 10 bzw. 100 MW vermehrt auch auf Gasturbinen niedrigerer Leistungsklassen etwa im unteren MW- oder im kW-Bereich (bis zu Leistungsklassen von rund 1 kW oder darunter). Solche sogenannten Mikrogasturbinen eignen sich insbesondere zum Einsatz als kompakte Einheiten in Blockheizkraftwerken zur dezentralen Strom- und Wärmeversorgung mit Kraft-/Wärmekopplung von Wohn- und/oder Gewerbeeinheiten, Krankenhäusern oder dergleichen. Selbstverständlich können sie auch in anderen Anwendungsgebieten verwendet werden, etwa als Hilfsaggregat oder Kleinkraftwerk zur reinen Stromerzeugung.

Für gewisse Anwendungsbereiche hat sich der Einsatz von subatmosphärischen Mikrogasturbinenanlagen auf Basis des invertierten Brayton-Kreislaufes als vorteilhaft herausgestellt. Bei diesen Anlagen werden Verbrennungsluft und Brennstoff in einer Brennkammer unter nahezu Atmosphärendruck umgesetzt - im Gegensatz zu konventionellen Mikrogasturbinenanlagen, in denen die Verbrennungsluft und der Brennstoff vor der Verbrennung über Verdichter auf einen erhöhten Druck gebracht werden. Das in einer subatmosphärischen Mikrogasturbinenanlage entstehende Abgas wird einer Turbine zugeführt und treibt diese an, wobei das Abgas auf einen Druck unterhalb des Atmosphärendrucks entspannt wird. Die Turbine treibt dabei zum einen einen auf der gleichen Welle liegenden Verdichter und weiterhin in der Regel einen Generator zur Stromerzeugung (zur Auskopplung von elektrischer Energie) an. Der Verdichter ist stromab der Turbine in der Abgasleitung angeordnet, wo er das Abgas von dem Druck unterhalb des Atmosphärendrucks zurück auf Atmosphärendruck verdichtet.

Vorteilhafte Anwendungsbereiche für derartige subatmosphärische Anlagen finden sich zum Beispiel bei sehr niedrigen benötigten Leistungsklassen (ca. 1 - 3 kW) etwa bei Kraft-/Wärmekopplungsanlagen für Einfamilienhäuser. Ein Vorteil hierbei besteht darin, dass trotz der sehr geringen Massenströme in diesen Leistungsbereichen sich aufgrund der geringeren Dichte ausreichend hohe Volumenströme ergeben, wodurch auch in diesen Leistungsklassen Standardteile etwa aus der Automobilindustrie verwendet werden können, insbesondere hinsichtlich Turbinen/Verdichter-Komponenten. Dies kann Kostenvorteile mit sich bringen und den Entwicklungsaufwand begrenzen.

Weiterhin lässt sich insbesondere bei Anwendungen unter Einsatz von Schwachgasen (Brenngase mit einem niedrigen Heizwert) als Brennstoff, beispielsweise aus biogenen Quellen, eine erhöhte Gesamteffizienz erzielen, da bei der subatmosphärischen Prozessführung auf einen Brennstoffverdichter, der vor allem bei Schwachgasen eine verhältnismäßig hohe Verdichterleistung erbringen muss, verzichtet werden kann.

Eine Mikrogasturbinenanlage basierend auf dem invertierten Brayton-Kreislauf ist beispielsweise in der DE 10 2013 112 851 A1 angegeben.

In einer weiteren, aus der US 6 298 654 B1 bekannten Mikrogasturbinenanlage wird ein "fett-quench-mager"-Brennerkonzept verwendet, in dem drei unterschiedliche Luftströme an der Verbrennung teilnehmen, wobei einer in der fetten Verbrennungszone und zwei, stromab davon zugegebene (Quenchluft sowie weitere Brennluft), in der mageren Verbrennungszone verbrannt werden. Dabei wird die Luft, wie im Stand der Technik üblich, in einem Gesamtstrom an die Brennkammer herangeführt und teilt sich an der Brennkammer auf, wobei das Verhältnis zwischen den Luftströmen über die Brennkammergeometrie festgelegt ist.

Eine weitere Mikrogasturbinenanlage, basierend auf dem invertierten Brayton-Kreislauf, ist in der DE 10 2012 102 351 A1 der Anmelderin angegeben.

Die US 5 950 417 A zeigt eine Mehrzonen-Brennkammer, die mit einem einstellbaren Kühlluftstrom beaufschlagt wird. Eine Mikrogasturbinenanlage basierend auf dem invertierten Brayton-Kreislauf ist nicht angegeben.

In der US 2012/131925 A1 und der US 2014/182298 A1 sind weitere Gasturbinenanlegen gezeigt. Mikrogasturbinenanlagen basierend auf dem invertierten Brayton-Kreislauf sind nicht offenbart.

Generell besteht bei derartigen Anlagen das Bestreben, das Betriebsverhalten insbesondere hinsichtlich Emissionswerte und Effizienz über einen breiten Betriebsbereich zu verbessern. Dies gilt insbesondere auch für den Teillastbetrieb und/oder beispielsweise unter Einsatz unterschiedlicher Brennstoffe oder auch, um längerfristigen Entwicklungen, wie zum Beispiel unterschiedlichen Brennkammermaterialien, flexibel begegnen zu können.

Der Erfindung liegt die Aufgabe zugrunde, eine flexible und effiziente Mikrogasturbinenanlage sowie ein Verfahren zum Betreiben einer Mikrogasturbinenanlage und ein Blockheizkraftwerk unter Verwendung der Mikrogasturbinenanlage bereitzustellen.

Die Aufgabe wird für die Mikrogasturbinenanlage, entsprechend der Merkmale des Anspruchs 1, und ähnlich auch für das Verfahren, entsprechend der Verfahrensschritte des Anspruchs 11, dadurch gelöst, dass stromab der primären Verbrennungszone in der Brennkammer weiterhin Sekundärgas, insbesondere Sekundärluft, zugeführt ist und dass stromauf der Brennkammer zumindest eine Einstellvorrichtung zur, insbesondere automatisierten, Einstellung des Verhältnisses zwischen Primär- und Sekundärgas während des Betriebs der Mikrogasturbinenanordnung angeordnet ist.

Bei aus dem Stand der Technik bekannten Mikrogasturbinenanlagen wird in der Regel das Gas durch eine gemeinsame Zuleitung an die Brennkammer herangeführt. An der Brennkammer teilt sich der Gasstrom auf, wobei das Verhältnis zwischen Primär- und Sekundärgas über die Brennkammergeometrie festgelegt ist und sich lediglich geringfügig zwischen unterschiedlichen Betriebspunkten ändert, beispielsweise aufgrund von sich ändernden Druckverlusten. Es hat sich jedoch herausgestellt, dass bei unterschiedlichen Betriebsbedingungen, vor allem zwischen Betriebspunkten im Volllast- und im Teillastbetrieb, unterschiedliche Verhältnisse zwischen Primär- und Sekundärgas für eine optimierte Verbrennung günstig sein können. Insbesondere wird häufig im Teillastbetrieb im Verhältnis weniger Primärgas benötigt, um eine optimierte (insbesondere stabile) Verbrennung zu gewährleisten. Eine optimierte Verbrennung wirkt sich insbesondere zugunsten niedrigerer Emissionswerte im Abgas (Stickoxide (NOx), Kohlenmonoxid (CO)) aus und kann auch die Gesamteffizienz der Anlage sowie weitere Aspekte positiv beeinflussen. Neben Anpassungen aufgrund des unterschiedlichen Lastbereichs ist eine Einstellbarkeit des Verhältnisses auch vorteilhaft hinsichtlich einer erhöhten Brennstoffflexibilität, da sich auch bei unterschiedlichen Brennstoffen, mit der die Mikrogasturbinenanlage gegebenenfalls betreibbar ist, unterschiedliche vorteilhafte Verhältnisse zwischen Primär- und Sekundärgas ergeben können. An dieser Stelle sei angemerkt, dass die Mikrogasturbinenanlage prinzipiell für den Einsatz gasförmiger, flüssiger und/oder fester Brennstoffe ausgelegt sein kann. Auch kann unter Umständen unter Betriebsbedingungen, bei denen in der Regel zur Stabilisierung der Verbrennung ein Pilotbrenner nötig ist, eventuell auf diesen verzichtet werden. Insgesamt lassen sich mit der erfindungsgemäßen Mikrogasturbinenanlage flexibel unterschiedliche Betriebsbedingungen effizient und mit geringem Schadstoffausstoß realisieren.

Das Primärgas und für gewöhnlich auch das Sekundärgas enthalten Oxidator, der in der Regel durch Sauerstoff gebildet ist. So handelt es sich bei dem Gas in der Regel um Luft und/oder ein Luftgemisch (zum Beispiel unter Beimischung von Abgas oder anderen Substanzen), denkbar wäre jedoch zum Beispiel auch ein anderes, Oxidator enthaltendes Gas, wie etwa reines rezirkulierendes Abgas mit Sauerstoffanteil oder Gas mit einem gegenüber Luft erhöhten Sauerstoffanteil. Als Sekundärgas wäre auch ein Gas ohne Oxidator denkbar, beispielsweise ein Abgas ohne Restsauerstoffgehalt.

Die Primärgaszufuhr kann mehrere Gaseinlässe, beispielsweise Gaseinlassdüsen aufweisen und ist zumindest teilweise im Bereich des Brenners, wo auch der Brennstoff zugeführt wird, angeordnet. Denkbar ist auch, dass Brennstoff und Primärgas zumindest teilweise vorgemischt und durch den gleichen Einlass/die gleichen Einlässe in die Brennkammer eingebracht werden.

Die primäre Verbrennungszone, in der eine Verbrennung unter Beteiligung des Primärgases stattfindet, kann dabei als einzige Verbrennungszone vorgesehen sein. Denkbar ist auch eine nachgelagerte zweite Verbrennungszone, in der die Verbrennung beispielsweise unter höherem Oxidatorüberschuss abläuft als in der ersten Verbrennungszone (d.h. bei einer höheren Luftzahl λ), oder andere Brennerkonfigurationen.

Das Sekundärgas wird vorzugsweise derart zugeführt, dass es nicht (oder zumindest großteils nicht) an der Verbrennung in der primären Verbrennungszone teilnimmt, wobei eine Rückströmung in diese Verbrennungszone nicht auszuschließen ist. Das Sekundärgas kann aber an einer Verbrennung in der zweiten Verbrennungszone, falls vorgesehen, zumindest teilweise teilnehmen.

Die Einrichtung zur Energieauskopplung wird häufig von einem Generator zur Stromerzeugung gebildet. Es kann sich jedoch beispielsweise auch um ein Übertragungsglied von mechanischer Energie oder eine andere Einrichtung zur Auskopplung von Energie aus der Mikrogasturbinenanlage handeln, um diese in ein anderes System einzukoppeln.

In einer vorteilhaften Ausgestaltungsvariante ist es vorgesehen, dass zur Zugabe des Sekundärgases die Brennkammer und/oder die Abgasleitung stromauf der Turbine zumindest eine weitere Gaszufuhr stromab der Primärgaszufuhr aufweist. Dabei kann auch die Gaszufuhr für das Sekundärgas mehrere Eintrittsöffnungen aufweisen, die auch unterschiedlich ausgestaltet sein können. Beispielsweise können Öffnungen in der Brennkammer und, gegebenenfalls zusätzlich, im Übergang von der Brennkammer zur Abgasleitung oder in der Abgasleitung selbst, ausgebildet sein. Vorteilhaft kann so das Sekundärgas in den Gesamt-Abgasstrom eingebracht werden, um eine Temperaturreduktion des Abgases zu erreichen. Auf diese Weise sind Abgastemperaturen erreichbar, durch die das Material der mit dem Abgas beaufschlagten Turbine nicht beschädigt und somit die Haltbarkeit der Turbine erhöht wird.

In einer weiteren vorteilhaften Ausgestaltungsvariante ist es vorgesehen, dass das Sekundärgas zumindest bereichsweise entlang von Wänden der Brennkammer zu deren Kühlung geführt ist. Dabei können insbesondere die Außenwände gekühlt werden, aber auch eine Kühlung der Innenwände in Art einer Filmkühlung nach Zugabe des Sekundärgases in die Brennkammer wäre denkbar. Auf diese Weise kommt dem Sekundärgas eine Kühlfunktion für die Kühlung der Brennkammerwände zu, sodass die Brennkammer die bei der Verbrennung entstehenden hohen Temperaturen ohne Schaden übersteht. In Verbindung mit der Absenkung der Abgastemperatur können so dem Sekundärgas mehrere Kühlfunktionen zu kommen, zum einen zunächst der Brennkammerwand durch konvektive Kühlung und zum anderen der des Abgases durch Zumischung.

Um eine definierte Zuführung und eine gute Einstellbarkeit des Verhältnisses zu ermöglichen, sind der Brennkammer neben einer Brennstoffzuleitung zumindest zwei getrennte Gaszuleitungen, eine Primärgaszuleitung und eine Sekundärgaszuleitung, zur getrennten Zufuhr von Primär- und Sekundärgas zugeordnet. Für eine flexible Einstellbarkeit des Verhältnisses kann weiterhin vorteilhaft vorgesehen sein, dass die Einstellvorrichtung in der Primärgaszuleitung und/oder in der Sekundärgaszuleitung angeordnet ist. Besonders günstig kann dabei die Verbrennung beeinflusst werden, wenn die Einstellvorrichtung zumindest in der Primärgaszuleitung angeordnet ist.

Für eine einfache und genaue Bedienbarkeit ist es von Vorteil, wenn die Einstellvorrichtung als Stell- und/oder Regelventilmittel mit zugeordneter Steuereinrichtung für eine automatische Einstellung ausgebildet ist. Dabei kann die Steuereinrichtung vorteilhafterweise auch Komponenten in einer entfernt angeordneten Steuereinheit umfassen, sodass die Steuerung/Regelung in eine zentrale Steuerung der Anlage integriert werden kann. Als Stellmittel ist dabei ein Stellventil oder auch eine einfache Anordnung zur Reduktion des Zuleitungsquerschnitts denkbar, beispielsweise eine Klappe oder dergleichen. Die Einstellung des Verhältnisses kann nun über eine definierte automatische Verstellung des Stellmittels, beispielsweise auf Grundlage tabellierter Werte und/oder Auslegungsberechnungen oder dergleichen, oder auch unter Rückkopplung einer Regelgröße erfolgen. Im Falle einer automatisierten Regelung können dabei bedarfsweise geeignete Regelalgorithmen verwendet werden. Als Regelgröße sind dabei unterschiedliche Größen denkbar, wie beispielsweise die Turbinenaustrittstemperatur, ein Emissionswert (insbesondere CO und/oder NOx) oder auch andere in der Anlagensteuerung erfasste Größen. Die Regelung kann dabei vorteilhaft als Unterfunktion in die Gesamtregelung der Anlage integriert sein oder auch separat erfolgen.

In einer bevorzugten Ausgestaltungsvariante sind die Brennkammer mit den Gaszufuhren und die Gaszuleitungen derart ausgelegt, dass sich bei einem definierten Betriebspunkt, vorzugsweise bei Volllast, ein vorbestimmtes Auslegungsverhältnis zwischen Primär- und Sekundärgas einstellt. Das Auslegungsverhältnis ergibt sich dabei beispielsweise durch Berechnungen zur Auslegung von zumindest Teilen der Mikrogasturbinenanordnung, sodass es sich um ein zumindest theoretisch bekanntes Verhältnis handelt. Das Auslegungsverhältnis wird dabei vorzugsweise mit vollständig geöffneter Einstellvorrichtung ermittelt. Eine Auslegung bezüglich des Volllast-Betriebspunktes ist insofern sinnvoll, als sich bei diesem Betriebspunkt der höchste Gasmassenstrom einstellt, von dem ausgehend nun durch Verstellung der Einstellvorrichtung der Massenstrom reduziert werden kann. Dadurch kann auch der Druckverlust in der/den Gaszuleitungen möglichst gering gehalten werden (dieser erhöht sich bei Schließen der Einstellvorrichtung), sodass sich durch diese Vorgehensweise Vorteile bezüglich der Effizienz der Mikrogasturbinenanlage ergeben können. Im Teillastbetrieb ist in der Regel ein geringeres Verhältnis von Primär- zu Sekundärgas nötig (d. h. verhältnismäßig weniger Primärgas), um eine stabile Verbrennung zu gewährleisten, sodass das Verhältnis (Auslegungsverhältnis) aus dem Volllastbetrieb im Teillastbetrieb durch die Einstellvorrichtung zur Erzielung einer optimierten Verbrennung reduziert werden kann. Sollte ein Betrieb mit unterschiedlichen Brennstoffen vorgesehen sein, kann es zweckmäßig sein, als Auslegungsbetriebspunkt denjenigen Volllastbetriebspunkt im Zusammenhang mit Brennstoff zu wählen, bei dem der höchste Gasmassenstrom benötigt wird.

Das optimale Verhältnis von Primär- zu Sekundärgas kann je nach Anwendungsfall stark variieren, zum Beispiel in Abhängigkeit von Lastpunkten, Turbinenaustrittstemperatur, Belastbarkeit der Materialien, Brennstoff etc. So kann auf ein Verhältnis ausgelegt werden, bei dem sich ein niedrigerer Primär- als Sekundärgasstrom ergibt, um eine ausreichende Kühlung des Abgases zur Materialschonung der Turbine zu erreichen. Denkbar wäre aber auch ein höherer Primär- als Sekundärgasstrom, wenn beispielsweise Materialien mit erhöhter Temperaturfestigkeit zum Einsatz kommen, oder aus anderen Gründen. Die erfindungsgemäße Einstellbarkeit des Verhältnisses ist hierbei vorteilhaft, um flexibel auf sich ändernde Randbedingungen reagieren zu können und über einen weiten Betriebsbereich eine hohe Effizienz und geringen Schadstoffausstoß zu erreichen.

Die Mikrogasturbinenanordnung umfasst weiterhin eine Rekuperatoreinheit, die einerseits von der Brennkammer zuzuführendem Gas zu dessen Vorwärmung und andererseits von Abgas stromab der Turbine durchströmt ist. Dabei ist die Rekuperatoreinheit abgasseitig vorzugsweise in der Abgasleitung unmittelbar stromab der Turbine, ohne dazwischenliegende weitere Komponenten, angeordnet. In diesem Bereich liegen hohe Abgastemperaturen etwa zwischen 500 - 1200 °C vor, die vorteilhaft zur Vorwärmung des durch die Rekuperatoreinheit in die Brennkammer zuzuführenden Gases (insbesondere Luft) genutzt werden können. Auf diese Weise lässt sich Energie in Form von Wärme im Kreislauf halten und die Effizienz (insbesondere die elektrische Effizienz) der Mikrogasturbinenanordnung im Vergleich zu einer Ausführung ohne Rekuperatoreinheit erheblich steigern.

Eine Aufteilstelle zur Aufteilung des Gases auf die getrennten Gaszuleitungen ist stromauf der Rekuperatoreinheit angeordnet, wobei die zumindest eine Einstellvorrichtung stromab der Aufteilstelle und stromauf der Rekuperatoreinheit angeordnet ist. Die Aufteilstelle kann dabei von vornherein als getrennte Ansaugstellen der Umgebungsluft ausgebildet sein, ohne dass zuvor ein Gesamtgasstrom eine gemeinsame Leitung durchströmt. Weiterhin ist eine Aufteilvorrichtung zur Aufteilung einer gemeinsamen Gaszuleitung in mehrere Gaszuleitungen denkbar, die zum Beispiel als T-Stück ausgebildet ist. Sie kann etwa hinsichtlich eines günstigen Strömungswiderstands geeignet geformt sein. Wenn der Rekuperatoreinheit getrennte Gaszuleitungen zugeführt werden und die Einstellvorrichtung stromauf der Rekuperatoreinheit angeordnet ist, befindet sich die Einstellvorrichtung in einem Bereich mit noch geringer Gastemperatur von etwa Umgebungsbedingungen, was den Einsatz einer kostengünstigeren Einstellvorrichtung erlaubt, die nicht speziell auf Hochtemperaturanwendungen ausgelegt sein muss.

In diesem Zusammenhang kann vorteilhaft vorgesehen sein, dass die Rekuperatoreinheit zumindest zwei getrennte Teilrekuperatoren umfasst, an die jeweils eine der Gaszuleitungen angeschlossen ist. Zu diesem Zwecke können die Teilrekuperatoren in dem Abgasstrom in Reihe angeordnet sein. Denkbar wäre auch eine parallele Anordnung, wobei der Abgasstrom vor Einleitung in die Rekuperatoreinheiten in Teilabgasströme aufgeteilt wird. Weiterhin kann vorteilhaft vorgesehen sein, dass die Rekuperatoreinheit einen Rekuperator mit getrennten Gasführungen für die durch die Gaszuleitungen zugeführten Gasströme und einer gemeinsamen Abgasführung aufweist. Die Verwendung eines Rekuperators mit getrennten Luftführungen kann dabei beispielsweise eine platzsparende Variante darstellen. Auf der anderen Seite könnte die Variante mit zwei getrennten Teilrekuperatoren bei bestimmten Ausführungsvarianten von Vorteil sein, bei denen zum Beispiel die Gaszuführungen örtlich relativ weit voneinander getrennt sind. Somit können beide Ausführungsvarianten je nach Ausgestaltung der Mikrogasturbinenanlage gewisse Vorteile mit sich bringen.

Um die Effizienz der Anlage weiter zu erhöhen, kann eine Anordnung zur Abgasrezirkulation mit einer Rezirkulationsleitung vorgesehen sein, die stromab des Verdichters aus der Abgasleitung abzweigt, wobei das rezirkulierte Abgas dem Primär-und/oder Sekundärgas über Ventilmittel, insbesondere stromauf der Rekuperatoreinheit, zuführbar ist. Vorteilhafterweise wird dabei ein über ein weiteres, in der Rezirkulationsleitung angeordnetes Ventilmittel einzustellender Teil des Gesamtabgasstroms rezirkuliert, während der restliche Teil des Abgases, gegebenenfalls nach Durchströmen eines Wärmetauschers, an die Umgebung abgegeben wird. Die Aufteilung des rezirkulierten Abgases auf das Primär- und/oder Sekundärgas kann entsprechend dem jeweiligen Betriebspunkt angepasst werden. Auf diese Weise ergibt sich eine weitere Einstellmöglichkeit, um die Anlage im Optimum des Emissionsspektrums zu betreiben. Auch eignet sich dieses Vorgehen insbesondere für Anlagen mit Brennwertnutzung, da sich durch die Abgasrezirkulation der Anteil an Wasserdampf im Abgas anreichern und anschließend vereinfacht auskondensieren lässt.

Eine Wirkungsgradsteigerung der Gesamtanlage lässt sich weiter dadurch erreichen, dass in der Abgasleitung stromab der Rekuperatoreinheit zumindest eine weitere Wärmetauscheinrichtung angeordnet ist. Die Wärmetauscheinrichtung kann dabei stromauf und/oder stromab des Verdichters in der Abgasleitung angeordnet sein. Hierbei kann vorteilhaft ein Wasserwärmetauscher verwendet werden, sodass die Abwärme des Abgases zur Aufheizung von beispielsweise Brauch- und/oder Heizwasser nutzbar ist.

In einer weiteren Ausgestaltungsvariante ist in der Primärgaszuleitung eine Zugabestelle für Zusätze, insbesondere von flüchtigen organischen Verbindungen (volatile organic compound(s), VOC), angeordnet. Zweckmäßigerweise kann die Zugabestelle ebenfalls als Ventilmittel ausgebildet sein. Nach Zugabe der Zusätze in das Primärgas lassen sich diese durch die Verbrennung in der Brennkammer umsetzen. Im Zusammenhang mit der erfindungsgemäßen Einstellvorrichtung bzw. der getrennten Zufuhr von Primär-und Sekundärgas ergibt sich der besondere Vorteil, dass die Zusätze gezielt dem Primärgas zuführbar sind und somit in der Verbrennungsreaktion komplett umgesetzt werden können. Hingegen wird bei herkömmlichen Systemen, bei denen das Gas als Gesamtstrom an die Brennkammer geführt wird, bei Zugabe von Zusätzen in das Gas ein Teil der Zusätze über das Sekundärgas stromab der Verbrennungszone zugegeben, sodass kein energetischer Umsatz erfolgt und sie in dem Abgas verbleiben. So lässt sich mit der erfindungsgemäßen Mikrogasturbinenanordnung ein besserer energetischer Nutzen der Zusätze erreichen und deren Rückstände im Abgas vermeiden.

Eine vorteilhafte Verwendung der Mikrogasturbinenanlage ergibt sich in einem Blockheizkraftwerk zur Strom- und/oder Wärmebereitstellung für eine Wohn- oder Gewerbeeinheit, auch öffentliche Gebäude und dergleichen, als dezentrale Energieversorgungseinheit.

Nachfolgend wird die Erfindung anhand von Ausführungsbeispielen unter Bezugnahme auf die Zeichnungen näher erläutert. Es zeigen:
- Fig. 1: ein Fließschema einer Mikrogasturbinenanlage mit einer Einstellvorrichtung in der Primärgaszuleitung,
- Fig. 2: ein Fließschema einer weiteren Mikrogasturbinenanlage mit einer Einstellvorrichtung in der Primärgaszuleitung und einer Zugabestelle für Zusätze,
- Fig. 3: ein Fließschema einer weiteren Mikrogasturbinenanlage mit einer Einstellvorrichtung in der Primärgaszuleitung und einer Anordnung zur Abgasrezirkulation,
- Fig. 4: eine schematische Skizze einer Brennkammer mit Gasführung mit einer gemeinsamen Rekuperatoreinheit und
- Fig. 5: eine schematische Skizze einer Brennkammer mit Gasführung mit getrennten Teilrekuperatoren.

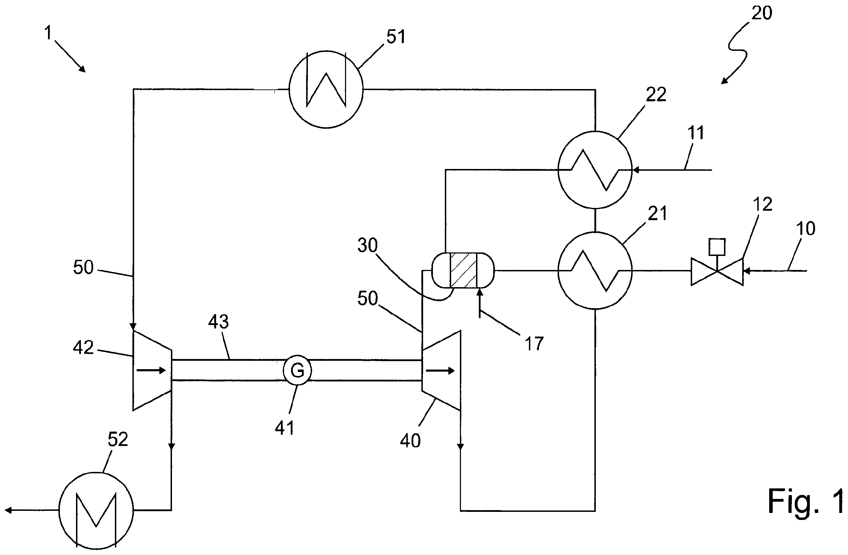

Fig. 1 zeigt ein Fließschema einer Mikrogasturbinenanlage 1, die im invertierten Brayton-Kreislauf betrieben wird und beispielsweise in einem Blockheizkraftwerk als Strom- und Wärmeerzeugungseinheit eingesetzt wird. Die Mikrogasturbinenanlage 1 weist zwei separate Gaszuleitungen, eine Primärgaszuleitung 10 und eine Sekundärgaszuleitung 11 auf, durch die Primärgas bzw. Sekundärgas einer Brennkammer 30 zugeführt wird. Das Gas enthält den für die Verbrennung notwendigen Oxidator und kann beispielsweise aus Luft, einem Luftgemisch (zum Beispiel mit Abgas und/oder anderen Zusätzen) oder auch einem Abgas oder mit Oxidator angereichertem Gas oder ähnlichem bestehen. Das Primär- und Sekundärgas kann getrennt in die Anlage angesaugt werden, wobei unterschiedliche Varianten des Gaseintritts denkbar sind, zum Beispiel auch eine Rohr-in-Rohr-Gestaltung, oder andere hier nicht gezeigte Varianten. Auch könnte das Primär- und Sekundärgas stromauf der beiden Zuleitungen 10, 11 durch eine gemeinsame Zuleitung geströmt und auf die Zuleitungen 10, 11 aufgeteilt worden sein (hier nicht dargestellt). In der Primärgaszuleitung 10 ist stromauf einer Rekuperatoreinheit 20 eine Einstellvorrichtung 12 in Form eines Stell- oder Regelventils angeordnet, die auch eine Klappe oder eine andere, zur Reduktion des Zuleitungsquerschnitts geeignete Vorrichtung sein könnte. Die Anordnung der Einstellvorrichtung 12 stromauf der Rekuperatoreinheit 20 ergibt den Vorteil, dass die Einstellvorrichtung 12 mit noch nicht vorgewärmtem Gas von etwa Umgebungstemperatur beaufschlagt wird. So kann auf eine hochtemperaturfeste Ausführung der Einstellvorrichtung 12 verzichtet werden.

Die Rekuperatoreinheit 20 umfasst zwei Teilrekuperatoren 21, 22, die jeweils von Primärgas (Teilrekuperator 21) bzw. Sekundärgas (Teilrekuperator 22) durchströmt werden. Die beiden Teilrekuperatoren 21, 22 der Rekuperatoreinheit 20 sind dabei bezüglich einer Abgasleitung 50 in Reihe angeordnet. Denkbar wäre auch eine parallele Anordnung in der Abgasleitung 50, wobei das Abgas vorteilhaft in TeilAbgasströme aufgeteilt würde. Die Primär- und Sekundärgasströme werden durch das heiße Abgas, das die Rekuperatoreinheit 20 als Wärme abgebendes Medium durchströmt, vor Eintritt in die Brennkammer 30 auf Temperaturen von mehreren hundert °C vorgewärmt.

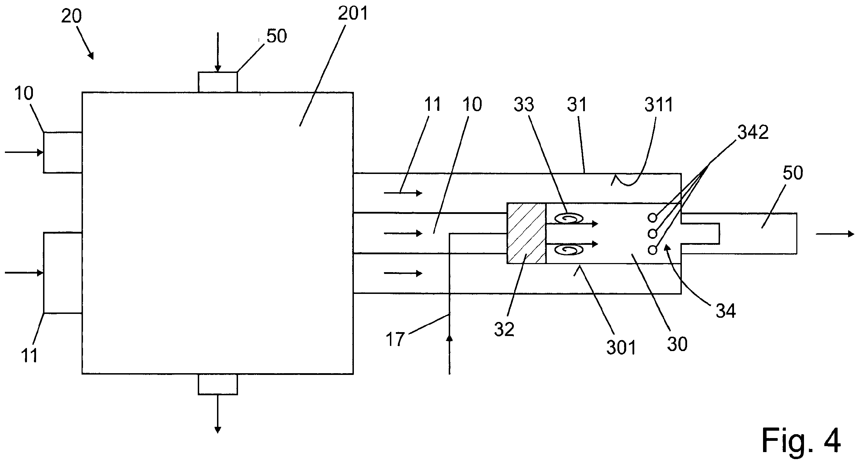

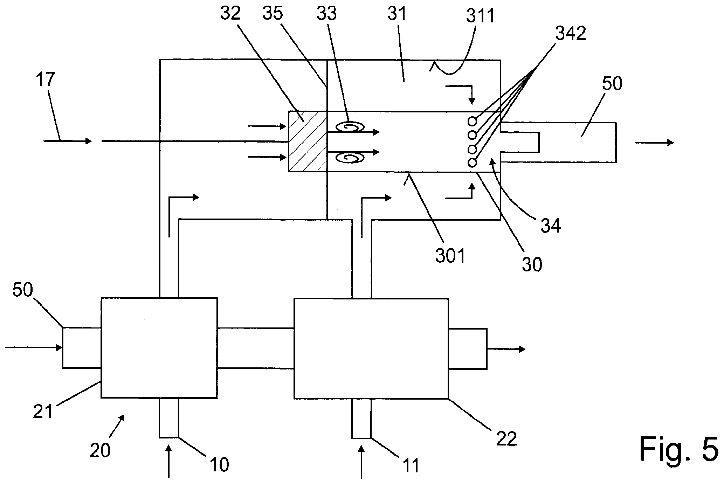

Der Primär- und Sekundärgasstrom werden der Brennkammer 30 getrennt zugeführt, wobei das Primärgas an der Verbrennung von der Brennkammer 30 zugeführtem Brennstoff in einer primären Verbrennungszone 33 (siehe Fig. 4, 5) teilnimmt. Der Brennstoff wird der Brennkammer 30 über eine Brennstoffzuleitung 17 zugeführt, die in Fig. 1 durch einen Pfeil angedeutet ist und die stromauf z.B. auch durch die Rekuperatoreinheit 20 geführt sein könnte. Stromab der primären Verbrennungszone 33 wird das Sekundärgas dem Abgas in der Brennkammer 30 und/oder der Abgasleitung 50 zugegeben. Nähere Details hierzu sind in Zusammenhang mit den Figuren 4 und 5 aufgeführt. Die Verbrennung findet unter nahezu atmosphärischen Druckbedingungen statt, abgesehen von den Druckverlusten, die sich über die Zuleitung der Fluidströme in die Brennkammer 30 ergeben. Aufgrund des nahezu atmosphärischen Betriebs kann sowohl auf einen Luftverdichter als auch Brennstoffverdichter stromauf der Brennkammer 30 verzichtet werden.

Das bei der Verbrennung entstehende heiße Abgas wird nun über die Abgasleitung 50 einer Turbine 40 zugeführt. Über die Turbine 40 wird das Abgas auf einen Druck unterhalb des Atmosphärendrucks entspannt, wobei es die Turbine 40 antreibt, die wiederum über eine Welle 43 mit einem Verdichter 42 und einem Generator 41 gekoppelt ist. So wird die aus der Entspannung des Abgases gewonnene Energie zum einen für den Antrieb des Verdichters 42 und zum anderen des Generators 41 genutzt. Über den Generator 41 wird elektrischer Strom erzeugt, der zur Verwendung in einem anderen System, beispielsweise zur Einspeisung in ein Stromnetz, aus der Mikrogasturbinenanlage 1 ausgekoppelt wird. Denkbar wäre auch eine andere Einheit zur Auskopplung von Energie, beispielsweise auch mechanischer Energie, aus der Mikrogasturbinenanlage 1.

Stromab der Turbine 40 strömt das entspannte Abgas durch die Abgasleitung 50 zunächst durch den ersten Teilrekuperator 21 zur Erwärmung des Primärgasstroms und anschließend durch den zweiten Teilrekuperator 22 zur Erwärmung des Sekundärgasstroms. Dadurch, dass der Primärgasstrom zuerst erwärmt wird und weiterhin den im Vergleich zu herkömmlichen Systemen, wo durch die Rekuperatoreinheit 20 ein Gesamtmassenstrom geführt wird, reduzierten Gasmassenstrom, kann das Primärgas vergleichsweise stärker erwärmt werden als in herkömmlichen Systemen ohne getrennte Gasführung. Durch die auf diese Weise gesteigerte Brennkammereintrittstemperatur des Primärgases kann die Verbrennung zusätzlich stabilisiert werden, was sich auch auf die Emissionen, insbesondere im Teillastbetrieb, vorteilhaft auswirken kann.

Anschließend wird das nun bereits heruntergekühlte Abgas durch die Abgasleitung 50 durch einen ersten Wasserwärmetauscher 51 geführt, wo es weitere Wärme an Wasser abgibt. Das erwärmte Wasser kann beispielsweise einem Warmwasserspeicher zugeführt werden und/oder als Heiz- und/oder Brauchwasser verwendet werden. Auf diese Weise kann die Gesamteffizienz der Mikrogasturbinenanlage 1 weiter erhöht werden.

Das entspannte und heruntergekühlte Abgas wird nun dem Verdichter 42 zugeführt, über den es zurück auf im Wesentlichen Atmosphärendruck (d.h. unter Berücksichtigung von Druckverlusten bis zum Abgasaustritt auf etwas oberhalb des Atmosphärendrucks) verdichtet wird. Bei der Verdichtung kommt es in dem Abgasstrom zu einem Temperaturanstieg, sodass vorteilhafterweise stromab des Verdichters 42 ein weiterer Wasserwärmetauscher 52 angeordnet ist, über den dem Abgas wiederum nutzbare Wärme entzogen wird. Anschließend verlässt das abgekühlte Abgas die Mikrogasturbinenanlage 1.

Die Geometrie der Brennkammer 30 und/oder der Gaszuleitungen 10,11 ist/sind vorzugsweise so ausgelegt, dass sich bei einem bestimmten (Auslegungs-) Betriebspunkt, vorzugsweise bei Volllast, bei komplett geöffneter Einstellvorrichtung 12 ein für diesen Betriebspunkt optimales Verhältnis zwischen Primär- und Sekundärgas einstellt. Dieses optimale Verhältnis ist zum Beispiel ein durch Auslegungsberechnungen ermitteltes Auslegungsverhältnis. Durch die insbesondere automatische Einstellbarkeit lässt sich das Verhältnis variieren und damit für unterschiedliche Betriebspunkte, beispielsweise im Teillastbetrieb und/oder bei Verwendung von Brennstoffen unterschiedlicher Zusammensetzung, ein optimiertes Verhältnis einstellen, das sich häufig von dem Auslegungsverhältnis unterscheidet. Typische Variationen des Verhältnisses können z. B. Verringerungen des Auslegungsverhältnisses bilden, die durch eine Reduktion des Primärgases durch die Einstellvorrichtung 12 um bis zu 40 Massen-% erzielt werden. Je nach Randbedingungen können aber auch andere Variationen zweckmäßig sein. Durch ein auf die jeweiligen Betriebsbedingungen möglichst gut eingestelltes Verhältnis lässt sich die Verbrennung optimieren. So kann beispielsweise auch bei bisher zu Instabilitäten neigenden Betriebspunkten (z. B. bei Teillast) eine stabile Verbrennung erreicht werden, sodass unter Umständen auf einen, in der Regel zur Stabilisierung bei bestimmten Betriebspunkten notwendigen, Pilotbrenner verzichtet werden kann. Damit kann die Komplexität der Anlage weiter reduziert werden. Alles in allem trägt so die Einstellbarkeit des Verhältnisses zu einer effizienten und vorteilhaft emissionsoptimierten Verbrennung über einen großen Bereich von unterschiedlichen Betriebsbedingungen bei.

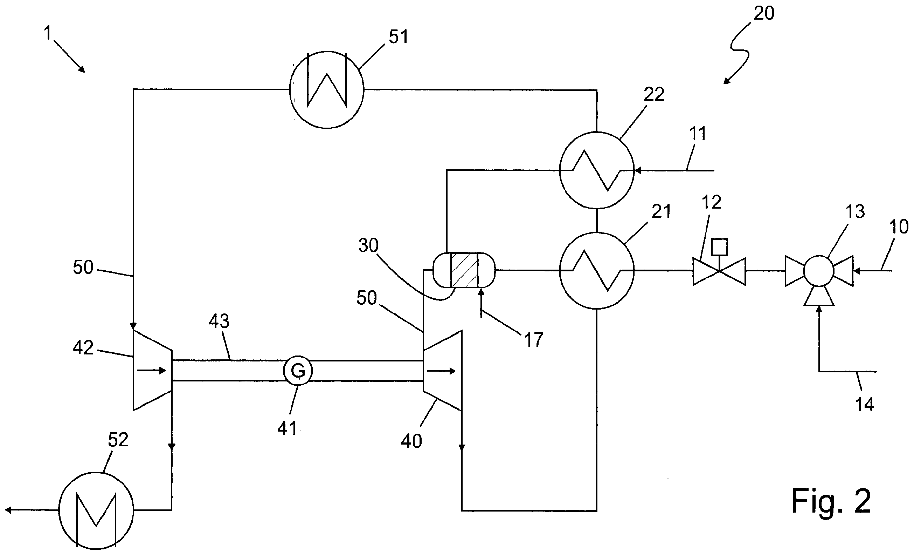

Fig. 2 zeigt ein Fließschema einer weiteren Variante der erfindungsgemäßen Mikrogasturbinenanlage 1. Der Kreislauf und Komponenten stromab der Rekuperatoreinheit 20 (bezüglich der Gaszuleitungen 10,11) können dabei entsprechend Fig. 1 ausgeführt sein. Im Unterschied zu Fig. 1 ist in der Primärgaszuleitung 10 stromauf der Einstellvorrichtung 12 eine Zugabestelle 13, hier in Form eines Dreiwegeventils vorgesehen. An die Zugabestelle 13 ist eine Zusatz-Zuleitung 14 angeschlossen. Über die Zusatz-Zuleitung 14 und die Zugabestelle 13 können dem Primärgas Zusätze, beispielsweise Prozessgase aus Industrieprozessen, zugeführt werden, die auch vorbehandelt sein können (zum Beispiel vorgereinigt und/oder mit Luft vorgemischt oder dergleichen). Die zugegebenen Zusätze werden dann über das Primärgas, das nun beispielsweise aus einem Luft- und Prozessgasgemisch gebildet ist, der Brennkammer 30 zugeführt und in dieser umgesetzt. Bei den Zusätzen kann es sich zum Beispiel um flüchtige organische Verbindungen (VOC), insbesondere Kohlenwasserstoffe handeln, die ihrerseits durch die Verbrennung zum einen energetisch genutzt werden und zum anderen aus dem Abgas entfernt werden können. Bei der erfindungsgemäßen Mikrogasturbinenanlage 1 lässt sich eine derartige Zuführung von Zusätzen in die Brennkammer 30 besonders vorteilhaft umsetzen, da die Zusätze über die getrennte Primärgaszuleitung 10 gezielt der primären Verbrennungszone 33 in der Brennkammer 30 zuführbar sind, wo sie verbrannt und dadurch aus dem Abgas entfernt werden. In herkömmlichen Systemen, wo das Gas zunächst als Gesamtstrom an die Brennkammer 30 herangeführt wird und erst dort durch die geometrische Gestaltung der Brennkammer 30 aufgeteilt wird, werden die Zusätze in der Regel dem Gesamtstrom zugegeben. So gelangt auch ein Teil in das Sekundärgas, das unter Umständen nicht an der Verbrennung teilnimmt, und so auch nicht umgesetzte Zusätze in das Abgas, wo sie an die Umgebung abgegeben werden können. Dieser Nachteil kann mit der erfindungsgemäßen Mikrogasturbinenanordnung 1 behoben werden.

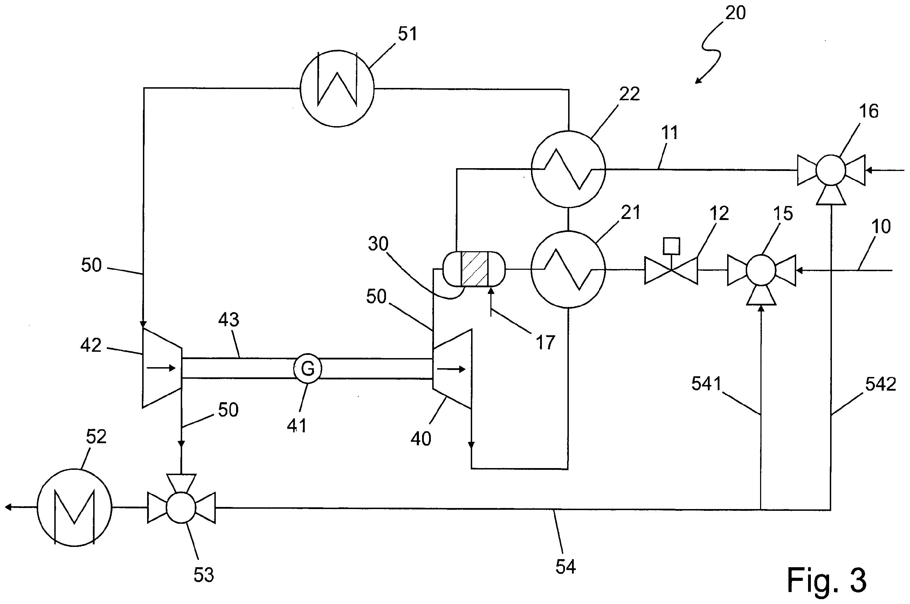

Eine weitere vorteilhafte Ausgestaltungsvariante ist in Fig. 3 dargestellt. Hierbei ist bei der Mikrogasturbinenanlage 1 vorteilhaft eine Anordnung zur Abgasrezirkulation mit einer Rezirkulationsleitung 54 vorgesehen, sodass die Abgasrezirkulation extern (d. h. außerhalb der Brennkammer 30) ausgeführt ist. Dabei wird aus der Abgasleitung 50 stromab des Verdichters 42 mittels eines Rezirkulationsventils 53 die Rezirkulationsleitung 54 abgezweigt. Über das Rezirkulationsventil 53 lässt sich vorzugsweise der Anteil des rezirkulierenden Abgases einstellen. Die Rezirkulationsleitung 54 wird in vorliegendem Beispiel auf eine Rezirkulationsleitung 541 und eine Rezirkulationsleitung 542 aufgeteilt, die jeweils dem Primärgas bzw. dem Sekundärgas über ein erstes Ventil 15 bzw. ein zweites Ventil 16 zugegeben werden können. Die Ventile 15, 16 sind dabei vorzugsweise derart ausgestaltet, dass der Anteil an Abgas, der dem Primär-und/oder dem Sekundärgas zugegeben werden kann, variiert werden kann (zum Beispiel zwischen 0 und 100 %). Auf diese Weise kann flexibel ein unterschiedlicher, für jeweilige Betriebsbedingungen optimierter Anteil von Abgas dem Primär- und dem Sekundärgas oder auch entweder nur dem Primär- oder Sekundärgas zugegeben werden. Die Ventile 15, 16 der Anordnung zur Abgasrezirkulation in den Gaszuleitungen 10, 11 sind dabei vorzugsweise stromauf der Rekuperatoreinheit 20 angeordnet, sodass auf eine besonders temperaturfeste Ausführung verzichtet werden kann. Vorzugsweise ist das erste Ventil 15 der Anordnung zur Abgasrezirkulation stromauf der Einstellvorrichtung 12 angeordnet, sodass das Primärgas, das nun beispielsweise aus einem Gemisch von Luft und Abgas besteht, als Gesamtmassenstrom einstellbar ist. Auf diese Weise kann bei dieser Anordnung neben der Variation des Verhältnisses von Primär- zu Sekundärgas zusätzlich auch die Aufteilung des rezirkulierten Abgases auf das Primär- und/oder Sekundärgas entsprechend einem Betriebspunkt angepasst werden, wodurch die Mikrogasturbinenanlage 1 nahezu jederzeit im Optimum des Emissionsspektrums betrieben werden kann. Weiterhin kann bei dieser Anordnung besonders effektiv eine Brennwertnutzung erfolgen, da durch die teilweise Rezirkulation des Abgases der Wasserdampfanteil im Abgas angereichert und so einfacher auskondensiert werden kann, beispielsweise in dem Wasserwärmetauscher 52.

Auch bei Vorhandensein einer Anordnung zur Abgasrezirkulation kann eine Zugabestelle für Zusätze in der Primärgaszuleitung vorgesehen sein (Kombination hier nicht dargestellt).

In Fig. 4 ist eine schematische Skizze einer Brennkammer 30 mit einem Ausschnitt einer Gasführung gezeigt. Die Rekuperatoreinheit 20 ist dabei als ein gemeinsamer Rekuperator ausgeführt, bei dem beide Gaszuleitungen 10, 11 getrennt durch ein Gehäuse 201 des Rekuperators geführt sind. Die stromauf des Rekuperators angeordnete Einstellvorrichtung 12, die in der Primär- und/oder Sekundärgaszuleitung 10, 11 angeordnet ist, ist hier nicht dargestellt. Auf der warmen Seite wird die Rekuperatoreinheit 20 von heißem Abgas durchströmt, das dabei seine Wärme an das Primär- bzw. Sekundärgas abgibt und dieses aufwärmt. Stromab der Rekuperatoreinheit 20 ist die Gasführung in dem vorliegenden Beispiel derart ausgeführt, dass die Primärgaszuleitung 10 als eine Art Rohr-in-Rohr-Leitung durch die Sekundärgaszuleitung 11 geführt ist und der Brennkammer 30 über einen Brennerkopf 32 zugeführt wird. Der Brennerkopf 32 ist in diesem Beispiel an dem stromauf gelegenen Ende der Brennkammer 30 angeordnet und kann auf unterschiedliche Weise ausgestaltet sein. Dabei kann er mehrere Einlässe, beispielsweise in Form von Gasdüsen oder auch Schlitzen oder anderen Arten von Öffnungen aufweisen. Der Brennstoff wird ebenfalls über den Brennerkopf 32 der Brennkammer 30 zugeführt, und zwar über die Brennstoffzuleitung 17, die gedichtet durch die Gaszuleitungen 10, 11 an den Brennerkopf 32 herangeführt wird und die stromauf zum Beispiel auch durch die Rekuperatoreinheit 20 geführt sein könnte. Die Brennstoffzufuhr in die Brennkammer 30 (hier nicht detailliert gezeigt) kann ebenfalls mehrere Brennstoff-Einlassöffnungen, beispielsweise in Form von Düsen, aufweisen. Ferner kann der Brennstoff mit dem Primärgas zumindest teilweise vorgemischt werden, bevor die beiden Medien in die Brennkammer 30 gelangen. Die Gase werden der Brennkammer 30 vorzugsweise kontinuierlich zugegeben und entzünden sich in der primären Verbrennungszone 33, in der der Brennstoff zusammen mit den in dem Primärgas enthaltenen Oxidator umgesetzt wird. Das entstehende Abgas strömt in der Brennkammer 30 in Richtung stromab.

Das Sekundärgas gelangt aus dem Rekuperator durch die die Primärgaszuleitung 10 umgebende Sekundärgaszuleitung 11 in einen Bereich zwischen der Brennkammer 30 und einem diese umgebenden Druckgehäuse 31, das die Brennkammer 30 von dem Umgebungsdruck entkoppelt. Dabei durchströmt das Sekundärgas einen Spalt, der durch eine Außenwand 301 der Brennkammer 30 und einer Innenwand des Druckgehäuses 31 gebildet wird. So wird das Sekundärgas entlang von Außenwänden 301 der Brennkammer 30 geleitet, wobei sie die Brennkammerwände kühlt. Stromab der primären Verbrennungszone 33 wird das Sekundärgas dem Abgas durch eine Sekundärgaszufuhr 34 zugegeben. Diese kann, wie hier beispielhaft gezeigt, in der Brennkammer 30 (stromab der primären Verbrennungszone 33) angeordnet sein und zum Beispiel weitgehend kreisförmige Eintrittsöffnungen 342 aufweisen. Denkbar sind aber auch andere Ausgestaltungsformen mit Öffnungen unterschiedlicher Form, Lage und Anzahl, die auch (zusätzlich oder alternativ) in einem in die Abgasleitung 50 ragenden Bereich der Brennkammer 30 angeordnet sein könnten. Das Sekundärgas dient in vorliegendem Falle hauptsächlich der Kühlung insbesondere konvektiver Art und zur Temperaturreduktion des heißen Abgases, dem es beigemischt wird.

Denkbar wäre auch, dass das Sekundärgas selbst zumindest teilweise an einer Verbrennung zum Beispiel in einer luftreicheren Verbrennungszone stromab der primären Verbrennungszone 33 teilnimmt. Auch eine Rückströmung von in die Brennkammer 30 eingebrachtem Sekundärgas in die primäre Verbrennungszone 33 kann vorgesehen sein bzw. ist je nach Brennkammergeometrie und/oder Betriebsbedingungen nicht auszuschließen.

Ein weiteres Beispiel einer möglichen Gas- und Brennstoffführung ist schematisch in Fig. 5 skizziert. Hierbei weist die Rekuperatoreinheit 20 zwei Teilrekuperatoren 21 und 22 auf, die getrennt von Primärgas durch die Primärgaszuleitung 10 und Sekundärgas durch die Sekundärgaszuleitung 11 durchströmt werden. Abgasseitig wird zunächst der Teilrekuperator 21 und anschließend der Teilrekuperator 22 von Abgas durch die Abgasleitung 50 durchströmt. Das Primärgas wird stromab des Teilrekuperators 21 in einen stromauf gelegenen Teil des Druckgehäuses 31 geleitet, der den Brennerkopf 32 der Brennkammer 30 umgibt, und von dort aus über den Brennerkopf 32 der Brennkammer 30 zugeführt. Die Brennstoffzuleitung 17 wird gedichtet durch die Primärgaszuleitung 10 ebenfalls in den Bereich des Brennerkopfes 32 geführt und von dort der Brennkammer 30, gegebenenfalls unter Vormischung mit dem Primärgas, zugeführt. Der Bereich, in dem das Sekundärgas dem Druckgehäuse 31 zugeführt wird, ist durch eine Trennung 35 von dem mit dem Primärgas gefluteten Bereich getrennt und stromab von diesem angeordnet. In diesem Bereich wird das Sekundärgas wiederum zwischen der Außenwand 301 der Brennkammer 30 und der Innenwand 311 des Druckgehäuses 31 zur Kühlung der Brennkammerwände geführt. Das Sekundärgas wird stromab der primären Verbrennungszone 33 der Brennkammer 30 durch die Sekundärgaszufuhr 34 zugeführt, die, wie bezüglich Fig. 4 beschrieben, unterschiedlich ausgeführt sein kann. Wie in Fig. 4 durchströmt das entstandene Abgas, das mit dem Sekundärgas gemischt ist, weiter stromab in Richtung Turbine 40 (hier nicht gezeigt).

In beiden Varianten nach Figuren 4, 5 ist ein weiterer Vorteil der Gasführung mit der Einstellvorrichtung 12 in Zusammenhang mit der getrennten Zufuhr der Gase zur Brennkammer 30 ersichtlich: bei einer Brennstoffleckage vom Übergang der Brennstoffzuleitung 17 in die Brennkammer 30 gelangt der Brennstoff lediglich in das Primärgas und mit diesem wieder in die Brennkammer 30. In einem herkömmlichen System würde sich der Brennstoff auch in das Sekundärgas verteilen und mit diesem gegebenenfalls in das Abgas gelangen.

Die beschriebenen Ausführungsbeispiele verdeutlichen, dass die Einstellbarkeit des Verhältnisses vorteilhaft in unterschiedliche Ausführungen der Mirkogasturbinenanlage 1 und insbesondere auch bei unterschiedlichen Gasführungen und/oder Geometrien der Brennkammer 30 vorteilhaft anwendbar ist. Dabei sind auch weitere Varianten als die gezeigten Beispiele denkbar.

## Patentansprüche

1. Mikrogasturbinenanlage (1) umfassend
eine Brennkammer (30) zur Erzeugung von Abgas durch Verbrennung von der Brennkammer (30) zugeführtem Brennstoff,
eine stromab der Brennkammer (30) in einer Abgasleitung (50) angeordnete Turbine (40) zur Entspannung des Abgases auf einen Druck unterhalb des Atmosphärendrucks,
einen stromab der Turbine (40) angeordneten Verdichter (42) und
eine der Turbine (40) zugeordnete Einrichtung zur Energieauskopplung,
wobei die Brennkammer (30) eine Primärgaszufuhr (32) zur Zugabe von Primärgas, insbesondere Primärluft, aufweist, das an der Verbrennung in einer primären Verbrennungszone (33) teilnimmt
wobei stromab der primären Verbrennungszone (33) in der Brennkammer (30) weiterhin Sekundärgas, insbesondere Sekundärluft, zugeführt ist, und wobei stromauf der Brennkammer (30) zumindest eine Einstellvorrichtung (12) zur Einstellung des Verhältnisses zwischen Primär- und Sekundärgas während des Betriebs der Mikrogasturbinenanordnung (1) angeordnet ist, der Brennkammer (30) neben einer Brennstoffzuleitung (17) zumindest zwei getrennte Gaszuleitungen, eine Primärgaszuleitung (10) und eine Sekundärgaszuleitung (11), zur getrennten Zufuhr von Primär- und Sekundärgas zugeordnet sind, die Mikrogasturbinenanordnung (1) weiterhin eine Rekuperatoreinheit (20) umfasst, die während des Betriebs einerseits von der Brennkammer (30) zuzuführendem Gas zu dessen Vorwärmung und andererseits von Abgas stromab der Turbine (40) durchströmt ist, **dadurch gekennzeichnet, dass** eine Aufteilstelle zur Aufteilung des Gases auf die getrennten Gaszuleitungen (10, 11) stromauf der Rekuperatoreinheit (20) angeordnet ist und, dass die zumindest eine Einstellvorrichtung (12) stromab der Aufteilstelle und stromauf der Rekuperatoreinheit (20) angeordnet ist.

2. Mikrogasturbinenanlage (1) nach Anspruch 1,
**dadurch gekennzeichnet,**
**dass** zur Zugabe des Sekundärgases die Brennkammer (30) und/oder die Abgasleitung (50) stromauf der Turbine (40) zumindest eine weitere Gaszufuhr (34) stromab der Primärgaszufuhr (32) aufweist.

3. Mikrogasturbinenanlage (1) nach Anspruch 1 oder 2,
**dadurch gekennzeichnet,**
**dass** das Sekundärgas zumindest bereichsweise entlang von Wänden der Brennkammer (30) zu deren Kühlung geführt ist.

4. Mikrogasturbinenanlage (1) nach einem der vorhergehenden Ansprüche,
**dadurch gekennzeichnet,**
**dass** die Einstellvorrichtung (12) in der Primärgaszuleitung (10) und/oder in der Sekundärgaszuleitung (11) angeordnet ist.

5. Mikrogasturbinenanlage (1) nach einem der vorhergehenden Ansprüche,
**dadurch gekennzeichnet,**
**dass** die Einstellvorrichtung (12) als Stell- und/oder Regelventilmittel mit zugeordneter Steuereinrichtung ausgebildet ist.

6. Mikrogasturbinenanlage (1) nach einem der vorhergehenden Ansprüche,
**dadurch gekennzeichnet,**
**dass** die Brennkammer (30) mit den Gaszufuhren (32, 34) und die Gaszuleitungen (10, 11) derart ausgelegt sind, dass sich bei einem definierten Betriebspunkt, vorzugsweise bei Volllast, ein vorbestimmtes Auslegungsverhältnis zwischen Primär- und Sekundärgas einstellt.

7. Mikrogasturbinenanlage (1) nach einem der vorhergehenden Ansprüche,
**dadurch gekennzeichnet,**
**dass** die Rekuperatoreinheit (20) zumindest zwei getrennte Teilrekuperatoren (21, 22) umfasst, an die jeweils eine der Gaszuleitungen (10, 11) angeschlossen ist oder
**dass** die Rekuperatoreinheit (20) einen Rekuperator mit getrennten Gasführungen für die durch die Gaszuleitungen (10, 11) zugeführten Gasströme und einer gemeinsamen Abgasführung aufweist.

8. Mikrogasturbinenanlage (1) nach einem der vorhergehenden Ansprüche,
**dadurch gekennzeichnet,**
**dass** eine Anordnung zur Abgasrezirkulation mit einer Rezirkulationsleitung (54) vorgesehen ist, die stromab des Verdichters (42) aus der Abgasleitung (50) abzweigt, wobei das rezirkulierte Abgas dem Primär- und/oder dem Sekundärgas über Ventilmittel (15, 16), insbesondere stromauf der Rekuperatoreinheit (20), zuführbar ist.

9. Mikrogasturbinenanlage (1) nach einem der vorhergehenden Ansprüche,
**dadurch gekennzeichnet,**
**dass** in der Abgasleitung (50) stromab der Rekuperatoreinheit (20) zumindest eine weitere Wärmetauscheinrichtung (51, 52) angeordnet ist.

10. Mikrogasturbinenanlage (1) nach einem der vorhergehenden Ansprüche,
**dadurch gekennzeichnet,**
**dass** in der Primärgaszuleitung (10) eine Zugabestelle (13) für Zusätze, insbesondere von flüchtigen organischen Verbindungen, angeordnet ist.

11. Verfahren zum Betreiben einer Mikrogasturbinenanlage (1) nach einem der Ansprüche 1 bis 10,
wobei Brennstoff unter Zugabe von Gas, insbesondere Luft, zur Erzeugung von Abgas in einer Brennkammer (30) verbrannt wird,
das entstandene Abgas stromab der Brennkammer (30) in einer Turbine (40) auf einen Druck unterhalb des Atmosphärendrucks unter Auskopplung von Energie entspannt wird und
stromab der Turbine (40) durch einen Verdichter (42) verdichtet wird,
wobei der Brennkammer (30) über eine Primärgaszufuhr (10) Primärgas, insbesondere Primärluft, zugeführt wird, das an der Verbrennung in einer primären Verbrennungszone (33) teilnimmt,
wobei stromab der primären Verbrennungszone (33) in der Brennkammer (30) weiterhin Sekundärgas, insbesondere Sekundärluft, zugeführt wird, und wobei das Verhältnis zwischen Primär- und Sekundärgas während des Betriebs der Mikrogasturbinenanordnung (1) eingestellt, insbesondere gesteuert oder geregelt, wird, der Brennkammer (30) neben einer Brennstoffzuleitung (17) zumindest zwei getrennte Gaszuleitungen, eine Primärgaszuleitung (10) und eine Sekundärgaszuleitung (11) zugeordnet sind, mittels derer Primär- und Sekundärgas getrennt zugeführt werden kann, eine Rekuperatoreinheit (20) der Mikrogasturbinenanordnung (1) einerseits von der Brennkammer (30) zuzuführendem Gas zu dessen Vorwärmung und andererseits von Abgas stromab der Turbine (40) durchströmt wird, **dadurch gekennzeichnet, dass** eine Aufteilstelle zur Aufteilung des Gases auf die getrennten Gaszuleitungen (10, 11) stromauf der Rekuperatoreinheit (20) durchströmt wird und, dass die zumindest eine Einstellvorrichtung (12) stromab der Aufteilstelle und stromauf der Rekuperatoreinheit (20) durchströmt wird.

12. Verfahren nach Anspruch 11,
**dadurch gekennzeichnet,**
**dass** das Sekundärgas zumindest bereichsweise entlang von Außenwänden (301) der Brennkammer (30) zu deren Kühlung geführt wird.

13. Blockheizkraftwerk unter Verwendung einer Mikrogasturbinenanlage (1) nach einem der Ansprüche 1 bis 10 zur Strom- und/oder Wärmebereitstellung für eine Wohn- oder Gewerbeeinheit.

## Claims

1. Micro-gas turbine plant (1) comprising a combustion chamber (30) for generating exhaust gas by combustion of fuel supplied from the combustion chamber (30), a turbine (40) which is arranged downstream of the combustion chamber (30) in an exhaust gas line (50) and is intended for expanding the exhaust gas to a pressure below atmospheric pressure, a compressor (42) which is arranged downstream of the turbine (40) and a device which is associated with the turbine (40) and is intended for extracting energy, the combustion chamber (30) having a primary gas supply (32) for adding primary gas, in particular primary air, which participates in the combustion in a primary combustion zone (33), secondary gas, in particular secondary air, additionally being supplied in the combustion chamber (30) downstream of the primary combustion zone (33), and at least one setting device (12) for setting the ratio between the primary gas and the secondary gas during operation of the micro-gas turbine arrangement (1) being arranged upstream of the combustion chamber (30), at least two separate gas supply lines, a primary gas supply line (10) and a secondary gas supply line (11), in addition to a fuel supply line (17), being associated with the combustion chamber (30) for the separate supply of the primary and the secondary gas, the micro-gas turbine arrangement (1) additionally comprising a recuperator unit (20) through which, during operation, the gas to be supplied from the combustion chamber (30) flows in order to preheat said gas, and through which exhaust gas flows downstream of the turbine (40), **characterized in that** a splitting point for splitting the gas into the separate gas supply lines (10, 11) is arranged upstream of the recuperator unit (20) and **in that** the at least one setting device (12) is arranged downstream of the splitting point and upstream of the recuperator unit (20).

2. Micro-gas turbine plant (1) according to claim 1, **characterized in that** the combustion chamber (30) and/or the exhaust gas line (50) upstream of the turbine (40) has at least one further gas supply (34) downstream of the primary gas supply (32) for adding the secondary gas.

3. Micro-gas turbine plant (1) according to either claim 1 or claim 2, **characterized in that** the secondary gas is guided at least in some regions along walls of the combustion chamber (30) in order to cool said walls.

4. Micro-gas turbine plant (1) according to any of the preceding claims, **characterized in that** the setting device (12) is arranged in the primary gas supply line (10) and/or in the secondary gas supply line (11).

5. Micro-gas turbine plant (1) according to any of the preceding claims, **characterized in that** the setting device (12) is designed as an adjustment and/or control valve means having an associated control device.

6. Micro-gas turbine plant (1) according to any of the preceding claims, **characterized in that** the gas supplies (32, 34) and the gas supply lines (10, 11) of the combustion chamber (30) are designed such that, at a defined operating point, preferably at full load, a predetermined design ratio between the primary gas and the secondary gas is set.

7. Micro-gas turbine plant (1) according to any of the preceding claims, **characterized in that** the recuperator unit (20) comprises at least two separate partial recuperators (21, 22), to each of which one of the gas supply lines (10, 11) is connected, or **in that** the recuperator unit (20) has a recuperator having separate gas ducts for the gas streams supplied through the gas supply lines (10, 11) and a common exhaust gas duct.

8. Micro-gas turbine system (1) according to any of the preceding claims, **characterized in that** an arrangement for exhaust gas recirculation is provided that has a recirculation line (54) which branches off from the exhaust gas line (50) downstream of the compressor (42), it being possible to supply the recirculated exhaust gas to the primary gas and/or to the secondary gas via valve means (15, 16), in particular upstream of the recuperator unit (20).

9. Micro-gas turbine plant (1) according to any of the preceding claims, **characterized in that** at least one further heat exchange device (51, 52) is arranged downstream of the recuperator unit (20) in the exhaust gas line (50).

10. Micro-gas turbine plant (1) according to any of the preceding claims, **characterized in that** an addition point (13) for additives, in particular volatile organic compounds, is arranged in the primary gas supply line (10).

11. Method for operating a micro-gas turbine plant (1) according to any of claims 1 to 10, fuel being burned with the addition of gas, in particular air, to generate exhaust gas in a combustion chamber (30), the resulting exhaust gas being expanded in a turbine (40) downstream of the combustion chamber (30) to a pressure below atmospheric pressure with extraction of energy, and being compressed by a compressor (42) downstream of the turbine (40), primary gas, in particular primary air, being supplied to the combustion chamber (30) via a primary gas supply (10), which gas participates in the combustion in a primary combustion zone (33), secondary gas, in particular secondary air, additionally being supplied in the combustion chamber (30) downstream of the primary combustion zone (33), and the ratio between the primary gas and the secondary gas being set, in particular controlled in an open-loop or closed-loop manner, during operation of the micro-gas turbine arrangement (1), at least two separate gas supply lines, a primary gas supply line (10) and a secondary gas supply line (11), in addition to a fuel supply line (17), being associated with the combustion chamber (30), by means of which gas supply lines the primary gas and the secondary gas can be supplied separately, the gas to be supplied from the combustion chamber (30) flowing through a recuperator unit (20) of the micro-gas turbine arrangement (1) to preheat said gas, and exhaust gas flowing through said unit downstream of the turbine (40), **characterized in that** the gas flows through a splitting point for splitting the gas into the separate gas supply lines (10, 11) upstream of the recuperator unit (20), and **in that** the gas flows through at least one setting device (12) downstream of the splitting point and upstream of the recuperator unit (20).

12. Method according to claim 11, **characterized in that** the secondary gas is guided at least in regions along outer walls (301) of the combustion chamber (30) to cool said walls.

13. Combined heat and power station using a micro-gas turbine plant (1) according to any of claims 1 to 10 for the provision of electricity and/or heat for a residential or commercial unit.

## Revendications

1. Installation de microturbine à gaz (1) comprenant
une chambre de combustion (30) pour produire des gaz de combustion, par combustion du combustible amené jusqu'à la chambre de combustion (30), une turbine (40) disposée en aval de la chambre de combustion (30) dans une conduite de gaz de combustion (50) et destinée à détendre les gaz de combustion pour les amener à une pression inférieure à la pression atmosphérique,
un compresseur (42) disposé en aval de la turbine (40) et
un système de découplage d'énergie associé à la turbine (40),
la chambre de combustion (30) présentant une amenée de gaz primaire (32) pour l'ajout de gaz primaire, en particulier d'air primaire, qui participe à la combustion dans une zone de combustion primaire (33),
du gaz secondaire, en particulier de l'air secondaire, étant également amené en aval de la zone de combustion primaire (33) dans la chambre de combustion (30),
et au moins un dispositif d'ajustement (12) pour ajuster le rapport entre le gaz primaire et le gaz secondaire pendant le fonctionnement du dipositif de microturbine à gaz (1) étant disposé en amont de la chambre de combustion (30),
au moins deux conduites d'alimentation de gaz distinctes, une conduite d'alimentation de gaz primaire (10) et une conduite d'alimentation de gaz secondaire (11) étant associées à la chambre de combustion (30), en plus d'une conduite d'alimentation de combustible (17), pour l'amenée distincte de gaz primaire et secondaire,
le dispositif de micro-turbine à gaz (1) comprenant en outre une unité de récupération (20), laquelle est traversée, pendant le fonctionnement, d'une part par du gaz destiné à être amené à la chambre de combustion (30) pour la préchauffer et d'autre part par des gaz de combustion en aval de la turbine (40),
**caractérisée en ce**
**qu'**un point de répartition pour la répartition du gaz entre les conduites d'alimentation de gaz distinctes (10, 11) est disposé en amont de l'unité de récupération (20) et en ce
**que** l'au moins un dispositif d'ajustement (12) est disposé en aval du point de répartition et en amont de l'unité de récupération (20).

2. Installation de microturbine à gaz (1) selon la revendication 1,
**caractérisée en ce**
**que**, pour l'ajout du gaz secondaire, la chambre de combustion (30) et/ou la conduite de gaz de combustion (50) en amont de la turbine (40) présente au moins une autre amenée de gaz (34) en aval de l'amenée de gaz primaire (32).

3. Installation de microturbine à gaz (1) selon la revendication 1 ou 2,
**caractérisée en ce**
**que** le gaz secondaire est guidé au moins dans certaines régions le long des parois de la chambre de combustion (30) pour refroidir celle-ci.

4. Installation de micro-turbine à gaz (1) selon l'une des revendications précédentes, **caractérisée en ce**
**que** le dispositif d'ajustement (12) est disposé dans la conduite d'alimentation de gaz primaire (10) et/ou dans la conduite d'alimentation de gaz secondaire (11).

5. Installation de microturbine à gaz (1) selon l'une des revendications précédentes,
**caractérisée en ce**
**que** le dispositif d'ajustement (12) est réalisé sous la forme d'un moyen de soupape d'actionnement et/ou de régulation comportant un système de commande associé.

6. Installation de microturbine à gaz (1) selon l'une des revendications précédentes,
**caractérisée en ce**
**que** la chambre de combustion (30) comportant les amenées de gaz (32, 34) et les conduites d'alimentation de gaz (10, 11) est conçue de telle manière qu'un rapport de conception prédéfini entre le gaz primaire et le gaz secondaire soit établi à un point de fonctionnement défini, de préférence à pleine charge.

7. Installation de microturbine à gaz (1) selon l'une des revendications précédentes,
**caractérisée en ce**
**que** l'unité de récupération (20) comprend au moins deux récupérateurs partiels distincts (21, 22) auxquels l'une des conduites d'alimentation de gaz (10, 11) est respectivement reliée, ou en ce
**que** l'unité de récupération (20) comporte un récupérateur comportant des écoulements de gaz distincts pour les flux de gaz amenés par les conduites d'alimentation de gaz (10, 11) et un écoulement de gaz de combustion commun.

8. Installation de microturbine à gaz (1) selon l'une des revendications précédentes,
**caractérisée en ce**
**qu'**un dispositif de recirculation des gaz de combustion comportant une conduite de recirculation (54) est prévu, lequel dispositif de recirculation des gaz de combustion se ramifie à partir de la conduite de gaz de combustion (50) en aval du compresseur (42), les gaz de combustion recirculés pouvant être amenés au gaz primaire et/ou secondaire par des moyens de soupape (15, 16), en particulier en amont de l'unité de récupération (20).

9. Micro-turbine à gaz (1) selon l'une des revendications précédentes,
**caractérisée en ce**
**qu'**au moins un autre système d'échange de chaleur (51, 52) est disposé dans la conduite de gaz de combustion (50) en aval de l'unité de récupération (20).

10. Installation de micro-turbine à gaz (1) selon l'une des revendications précédentes,
**caractérisée en ce**
**qu'**un point d'addition (13) pour des additifs, en particulier de composés organiques volatils, est disposé dans la conduite d'alimentation de gaz primaire (10).

11. Procédé de fonctionnement d'une installation de microturbine à gaz (1) selon l'une des revendications 1 à 10,
dans lequel du combustible est brûlé dans une chambre de combustion (30) en ajoutant du gaz, en particulier de l'air, pour produire des gaz de combustion,
les gaz de combustion résultants étant détendus en aval de la chambre de combustion (30) dans une turbine (40) pour les amener à une pression inférieure à la pression atmosphérique en découplant de l'énergie,
et étant comprimés en aval de la turbine (40) par un compresseur (42), un gaz primaire, en particulier de l'air primaire, étant amené à la chambre de combustion (30) par l'intermédiaire d'une amenée de gaz primaire (10), lequel gaz primaire participe à la combustion dans une zone de combustion primaire (33),
un gaz secondaire, en particulier de l'air secondaire, étant également amené en aval de la zone de combustion primaire (33) dans la chambre de combustion (30),
et le rapport entre le gaz primaire et le gaz secondaire étant ajusté pendant le fonctionnement du dispositif de microturbine à gaz (1), en particulier commandé ou régulé,
la chambre de combustion (30) étant associée, en plus d'une conduite d'alimentation de combustible (17), à au moins deux conduites d'alimentation de gaz distinctes, une conduite d'alimentation de gaz primaire (10) et une conduite d'alimentation de gaz secondaire (11), au moyen desquelles le gaz primaire et le gaz secondaire peuvent être amenés distinctement,
une unité de récupération (20) du dispositif de micro-turbine à gaz (1) étant traversée d'une part par le gaz destiné à être amené à la chambre de combustion (30) pour le préchauffage de celle-ci et d'autre part par les gaz de combustion en aval de la turbine (40),
**caractérisé en ce**
**qu'**un point de répartition pour la répartition du gaz dans les conduites d'alimentation de gaz distinctes (10, 11) est traversé en amont de l'unité de récupération (20) et en ce
**que** l'au moins un dispositif d'ajustement (12) est traversé en aval du point de répartition et en amont de l'unité de récupération (20).

12. Procédé selon la revendication 11,
**caractérisé en ce**
**que** le gaz secondaire est guidé au moins dans certaines régions le long des parois extérieures (301) de la chambre de combustion (30) pour refroidir celle-ci.

13. Centrale de cogénération utilisant une installation de micro-turbine à gaz (1) selon l'une des revendications 1 à 10 pour fournir de l'électricité et/ou de la chaleur à une unité résidentielle ou commerciale.
